(19) Europäisches Patentamt
European Patent Office
Office européen des brevets

(11) EP 0 576 984 B1

## (12) EUROPEAN PATENT SPECIFICATION

(45) Date of publication and mention
of the grant of the patent:
**17.09.1997 Bulletin 1997/38**

(51) Int Cl.⁶: **C08L 83/07**, C09D 183/07

(21) Application number: **93110002.8**

(22) Date of filing: **23.06.1993**

(54) **Organopolysiloxane composition for the formation of cured release films**

Organopolysiloxanzusammensetzung zur Herstellung einer gehärteten Trennfolie

Composition d'organopolysiloxane pour le formation d'un film détachable durci

(84) Designated Contracting States:
**DE FR GB IT**

(30) Priority: **29.06.1992 JP 194881/92**

(43) Date of publication of application:
**05.01.1994 Bulletin 1994/01**

(73) Proprietor: **Dow Corning Toray Silicone
Company, Limited
Tokyo 103 (JP)**

(72) Inventor: **Hayashi, Masushi,
Dow Corning Toray Silicone
Ichihara-shi, Chiba Prefecture (JP)**

(74) Representative:
**Sternagel, Hans-Günther, Dr. et al
Patentanwälte Dr. Michael Hann, Dr. H.-G.
Sternagel, Dr. H. Dörries,
Sander Aue 30
51465 Bergisch Gladbach (DE)**

(56) References cited:
**EP-A- 0 226 934        EP-A- 0 497 349
EP-A- 0 543 401**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to an organopolysiloxane composition for the formation of cured release films, hereinafter referred to as a release film-forming organopolysiloxane composition.

Materials that are releaseable or peelable from tacky substances can be prepared by the formation of cured films from organopolysiloxane compositions for the surfaces of such substrates as paper, laminated paper, synthetic films, woven and knitted fabrics, metal foils, and so forth. However, these organopolysiloxane compositions are inadequately adherent to thermoplastic films, such as polyethylene film and polypropylene film. As a result, when the surface of the cured film is forcefully rubbed, a partial delamination of the cured film will occur and the releaseability from tacky substances becomes impaired. Moreover, delamination of the cured film worsens with the passage of time.

In response to this, Japanese Patent Publication Sho 46-2187 (2,187/1971) teaches a release film-forming organopolysiloxane composition that is strongly substrate adherent. This composition is obtained by the addition of gamma-glycidoxypropyltrimethoxysilane and vinyltriacetoxysilane to a curable organopolysiloxane composition. However, since this composition does not afford an improved substrate adherence unless heated at high temperatures, it suffers from the drawback of being unsuitable for application to thermoplastic films which are poorly heat-resistant.

As the result of extensive research, the present inventors have found a solution to the problems described above.

The present invention takes as its object the introduction of a release film-forming organopolysiloxane composition that cures at relatively low temperatures to yield a cured film that tightly adheres to thermoplastic films such as polyethylene film, polypropylene film, and so forth.

The present invention relates to a release film-forming organopolysiloxane composition that comprises

(A) 100 weight parts of an organopolysiloxane that has a viscosity at 25°C of at least 40 centipoise (mPa.S) and contains on average at least 2 alkenyl groups in each molecule,

(B) 0.5 to 20 weight parts of an organohydrogenpolysiloxane that has a viscosity at 25°C of 1 to 1,000 centipoise (mPa.s) and contains on average at least 3 silicon-bonded hydrogen atoms in each molecule,

(C) 0.5 to 20 weight parts of an organoaluminum compound,

(D) 1 to 40 weight parts of an organofunctional alkoxysilane seleted from (i) methacryloxy-containing alkoxysilanes and (ii) acryloxy-containing alkoxysilanes,

(E) 1 to 40 weight parts of an alkenyl-containing organoacyloxysilane, other than component (D), and

(F) a catalytic quantity of a platinum group metal catalyst.

The release film-forming organopolysiloxane composition of the present invention is characterized by its ability to cure at relatively low temperatures to yield a cured release film that tightly adheres to any of various substrates with which the composition is in contact during its cure. It is further distinguished by its ability to develop a very good adhesiveness for synthetic resin films (e.g., polyethylene film, polypropylene film, and so forth) for which prior release compositions have developed only a poor adhesiveness.

To explain the preceding in greater detail, component (A) used in the present invention comprises organopolysiloxanes that contain on average at least 2 alkenyl groups in each molecule and has a viscosity at 25°C of at least 40 centipoise (mPa.s). Component (A) forms the cured release film through a crosslinking reaction with component (B). In order for this component to undergo a crosslinking reaction with component (B), it must contain on average at least 2 alkenyl groups in each molecule. Said alkenyl groups are exemplified by vinyl, allyl, propenyl, pentenyl, and hexenyl, and vinyl is preferred among these.

A typical example of component (A) comprises alkenyl-containing organopolysiloxane with the average formula

$$R^1_a SiO_{(4-a)/2}$$

in which $\underline{a}$ averages 1.95 to 2.05 and $R^1$ comprises one or more groups from among substituted and unsubstituted monovalent hydrocarbon groups as exemplified by alkyl groups such as methyl, ethyl, propyl, and butyl; aryl groups such as phenyl and tolyl; alkenyl groups such as vinyl, allyl, propenyl, pentenyl, and hexenyl; cycloalkyl groups such as cyclohexyl; and these groups in which all or part of the carbon-bonded hydrogen has been replaced with halogen or the cyano group. Methyl preferably comprises at least 70% of $R^1$ groups in this polysiloxane. The molecular structure of this component is exemplified by straight chain and branched chain, but straight chain is preferred. The molecular chain terminals are exemplified by the trimethylsiloxy group, dimethylvinylsiloxy group, methyldivinylsiloxy group, and hydroxyl group. The viscosity should be at least 40 centipoise (mPa.s), and even gums can be used. Viscosities below 40 centipoise (mPa.s) are unuseable due to the resulting excessively large penetration into the substrate.

When the composition of the present invention is used in the form of a solvent-free release composition, the viscosity of component (A) at 25°C should be 40 to 10,000 centipoise (mPa.s) and is preferably 40 to 5,000 centipoise (mPa.s). When the composition is used and formulated with solvent, operable viscosities for component (A) range from 100,000 centipoise (mPa.s) to that of gums, while viscosities of at least 500,000 centipoise (mPa.s) are preferred.

Component (A) is specifically exemplified by dimethylvinylsiloxy dimethylpolysiloxanes, dimethylvinylsiloxy dimethylsiloxane-methylvinylsiloxane copolymers, trimethylsiloxy methylvinylsiloxane-dimethylsiloxane copolymers, and hydroxyl methylvinylsiloxane-dimethylsiloxane copolymers.

Component (B) used in the present invention comprises organohydrogenpolysiloxane that has a viscosity at 25°C of 1 to 1,000 centipoise (mPa.s) and contains on average at least 3 silicon-bonded hydrogen atoms in each molecule. This component is a crosslinker for component (A), and it must contain on average at least 3 silicon-bonded hydrogen atoms in each molecule in order to yield a cured film through the crosslinking reaction with component (A). A typical example of component (B) is organohydrogenpolysiloxane with the average unit formula

$$R^2{}_b SiO_{(4-b)/2}$$

in which $\underline{b}$ averages 1.50 to 3.00 and $R^2$ is the hydrogen atom or an alkyl group such as methyl, ethyl, propyl, and octyl. The molecular structure of component (B) includes straight chain, branched chain, and cyclic. The molecular chain terminal is exemplified by trialkylsiloxy and dialkylhydrogensiloxy. Although the viscosity of component (B) at 25°C should be 1 to 1,000 centipoise (mPa.s), viscosities of 5 to 500 centipoise (mPa.s) are preferred. Volatilization readily occurs when the viscosity falls below 1 centipoise (mPa.s). When the viscosity exceeds 1,000 centipoise (mPa.s), a lengthy curing time is required in order to obtain a cured film with a suitable release performance.

Component (B) is specifically exemplified by trimethylsiloxy dimethylsiloxane-methylhydrogensiloxane copolymers, dimethylhydrogensiloxy dimethylsiloxane-methylhydrogensiloxane copolymers, trimethylsiloxy methylhydrogenpolysiloxanes, cyclic methylhydrogenpolysiloxanes, and cyclic dimethylsiloxane-methylhydrogensiloxane copolymers. This component (B) is added at 0.5 to 20 weight parts per 100 weight parts component (A) and preferably at 1 to 10 weight parts per 100 weight parts component (A). Curing is unsatisfactory at below 0.5 weight parts, while additions in excess of 20 weight parts have an unfavorable influence on the release performance of the cured film.

The organoaluminum compound comprising component (C) used in the present invention functions to improve substrate adherence. This component is specifically but nonexhaustively exemplified by aluminum alcoholates such as $(MeO)_3Al$, $(EtO)_3Al$, and $(n\text{-}PrO)_3Al$; the aluminum salts of naphthenic acid, stearic acid, octylic acid and, benzoic acid; aluminum chelates prepared by reacting an aluminum alcoholate and acetoacetate ester or dialkyl malonate; the organic acid salts of aluminum oxide; aluminum acetylacetonate; and so forth. Preferred are the aluminum chelates and aluminum alcoholates. The aluminum chelates are particularly preferred for their excellent stability. The component (C) should be added at 0.5 to 20 weight parts per 100 weight parts component (A) and preferably at 1 to 10 weight parts per 100 weight parts component (A). Curing of the composition of the present invention will be unsatisfactory and substrate adherence is also reduced at amounts of less than 0.5 weight parts. Amounts in excess of 20 weight parts have an unfavorable influence on the release performance of the cured film.

Component (D) used in the present invention consists of methacryloxy-containing or acryloxy-containing alkoxysilanes, and this component also functions to improve substrate adherence by the composition of the present invention. This component is specifically exemplified by gamma-methacryloxypropyltrimethoxysilane, gamma-methacryloxypropyl(methyl)dimethoxysilane, gamma-acryloxypropyltrimethoxysilane, gamma-acryloxypropyl(methyl)dimethoxysilane, and the preceding silanes in which an ethoxy group replaces the methoxy group. The component (D) should be added at 1 to 40 weight parts per 100 weight parts component (A) and preferably at 10 to 30 weight parts per 100 weight parts component (A). The substrate adherence is reduced at an amounts below 1 weight part while amounts in excess of 40 weight parts has an unfavorable influence on the release performance of the cured film.

The alkenyl-containing organoacyloxysilane comprising component (E) used in the present invention also functions to improve substrate adherence. Both the alkenyl group and acyloxy group preferably contain 2 to 4 carbon atoms. Specific examples are vinyltriacetoxysilane, allyltriacetoxysilane, vinylmethyldiacetoxysilane, and vinyltripropionoxysilane.

The platinum group metal catalyst comprising component (F) used in the present invention is a catalyst for the crosslinking reaction between components (A) and (B). This component is specifically exemplified by chloroplatinic acid, alcohol-modified chloroplatinic acid, olefin complexes of chloroplatinic acid, chloroplatinic acid/vinylsiloxane complexes, chloroplatinic acid/ketone complexes, solid platinum supported on a carrier such as alumina or silica, platinum

EP 0 576 984 B1

black, palladium catalysts, and rhodium catalysts. This component (F) should be added in a catalytic quantity, which is generally a quantity that provides 10 to 1,000 ppm as platinum group metal based on the total quantity of components (A) plus (B).

The composition of the present invention is prepared simply by mixing components (A), (B), (C), (D), (E), and (F) to homogeneity. No specific restriction attaches to the sequence of addition of the individual components. However, when the composition will not be used immediately after mixing, a preferred procedure consists of keeping the mixture of components (A) and (B) separate from the mixture of components (C), (D), (E), and (F) and blending these two mixtures immediately prior to use.

In order to effect the formation of a cured film from the composition of the present invention, it is sufficient to coat the composition of the present invention on the surface of a substrate and heat to temperatures of 50°C to 200°C. While the composition of the present invention consists of the above-described components (A) through (F), it may also contain other components on an optional basis. Said other components are exemplified by organic solvents, release-adjusting agents, addition-reaction retarders, and pigments.

The aforesaid organic solvents are exemplified by aromatic hydrocarbons such as benzene, toluene, and xylene; aliphatic hydrocarbons such as heptane, hexane, and pentane; halogenated hydrocarbons such as trichloroethylene and perchloroethylene; ethyl acetate; and methyl ethyl ketone.

The aforesaid addition-reaction retarders are exemplified by alkynyl alcohols such as 3-methyl-1-butyne-3-ol, 3,5-dimethyl-1-hexyne-3-ol, 3-methyl-1-pentyne-3-ol, and phenylbutynol, or by 3-methyl-3-pentene-1-yne, 3,5-dimethyl-1-hexyne-3-ene, benzotriazole, and methylvinylsiloxane cyclics.

The present invention is explained in greater detail below through illustrative examples. In the examples, "parts" denotes "weight parts" and the plasticity refers to the value measured at 25°C based on JIS 2123 using a Williams plastometer. The method for application of the release film-forming organopolysiloxane composition, the method for production of the cured film, and the methods for evaluating the cured film of this invention are described below.

## Application method and method for production of the cured film

The release film-forming organopolysiloxane composition was diluted to 5% solids with toluene and coated using a No. 10 Meyer bar on the synthetic resin test film substrate. This was then heated for 30 seconds in a hot-air circulation oven held at 120°C in order to produce a cured film from the release film-forming organopolysiloxane composition. The following were used as the synthetic resin test films: polyethylene-laminated paper, oriented polypropylene film (OPP film), polyethylene film (PET film), and aluminum vapor-deposited cast polypropylene film (Al vapor-deposited CPP film).

## Adhesion

The release film-forming organopolysiloxane composition was coated and cured by the methods described above. After separator ageing for 10 days at 40°C and 90% relative humidity, the surface of the cured film was rubbed with a finger and film delamination was visually evaluated.

## Release resistance

The release film-forming organopolysiloxane composition was coated and cured by the methods described above. A solvent-based acrylic pressure-sensitive adhesive (Oribine BPS-5127, tradename of Toyo Ink Seizo Kabushiki Kaisha) was coated on the surface of the cured film followed by heat treatment for 2 minutes at 70°C. Polyester film (Mirror S-10, 25 microns, tradename of Toray Kabushiki Kaisha) was then pasted onto the treated surface. After ageing for 1 day at 25°C under a load of 20 g/cm$^2$, the assembly was cut to a width of 5 cm to give a test specimen. Using a tensile tester, the polyester film was peeled off at 180° and a peel rate of 0.3 m/minute, and the force (g) required for peeling was measured.

## Residual adhesion ratio

A pressure-sensitive polyester tape (Nitto Polyester Tape 31B, tradename of Nitto Denko Kabushiki Kaisha) was pasted on the surface of the cured film. The tape was peeled off after ageing for 20 hours at 70°C under a load of 20 g/cm$^2$. It was then adhered using a 2 kg rubber roller on a stainless steel plate. After holding for 30 minutes under a load of 20 g/cm$^2$ at 25°C, the adhesive force (g) was measured by pulling off the film at 180° and a peel rate of 0.3 m/minute using a tensile tester. The pressure-sensitive polyester tape was also directly applied to stainless steel plate using a 2 kg rubber roller, and its adhesive force (g) was measured under the same conditions as above to give the native adhesive force. The residual adhesion ratio was calculated from the following equation using the measured

values.

$$\begin{cases} \text{residual} \\ \text{adhesion} = \quad \text{(residual adhesive force/original} \\ \qquad\qquad\qquad \text{adhesive force) x 100} \\ \text{ratio (\%)} \end{cases}$$

Example 1

The following were mixed in the proportions reported in Table 1: dimethylvinylsiloxy-terminated dimethylsiloxane-methylvinylsiloxane copolymer gum (dimethylsiloxane unit : methylvinylsiloxane unit molar ratio = 29 : 1, 1.2 weight% vinyl content, plasticity = 1.56, hereinafter referred to as polysiloxane A), trimethylsiloxy-terminated methylhydrogenpolysiloxane with a viscosity of 15 centipoise (mPa.s) (hereinafter referred to as polysiloxane B), aluminum monoacetylacetonatebis(ethyl acetoacetate), gamma-methacryloxypropyltrimethoxysilane, and vinyltriacetoxysilane. A release film-forming organopolysiloxane composition was then produced by addition of sufficient chloroplatinic acid/divinyltetramethyldisiloxane complex to provide 150 ppm platinum metal, based on the composition. The adhesion, release resistance, and residual adhesion ratio of this composition were measured, and these results are reported in Table 1 below.

Comparison Example 1

An organopolysiloxane composition was prepared as in Example 1, but in this case omitting the aluminum monoacetylacetonatebis(ethyl acetoacetate), gamma-methacryloxypropyltrimethoxysilane, and vinyltriacetoxysilane used in Example 1. The properties of this composition were measured as in Example 1, and these results are reported in Table 1 below.

Comparison Example 2

An organopolysiloxane composition was prepared as in Example 1, but in this case omitting the vinyltriacetoxysilane used in Example 1. The properties of this composition were measured as in Example 1, and these results are reported in Table 1 below.

Comparison Example 3

An organopolysiloxane composition was prepared as in Example 1, but in this case omitting the gamma-methacryloxypropyltrimethoxysilane used in Example 1. The properties of this composition were measured as in Example 1, and these results are reported in Table 1 below.

Comparison Example 4

An organopolysiloxane composition was prepared as in Example 1, but in this case omitting the aluminum monoacetylacetonatebis(ethyl acetoacetate) used in Example 1. The properties of this composition were measured as in Example 1, and these results are reported in Table 1 below.

TABLE 1

| | Example | Comparison Examples | | | |
|---|---|---|---|---|---|
| | 1 | 1 | 2 | 3 | 4 |
| polysiloxane A | 100 | 100 | 100 | 100 | 100 |
| polysiloxane B | 4 | 4 | 4 | 4 | 4 |
| aluminum monoacetylacetonate-bis(ethyl acetoacetate) | 10 | | 10 | 10 | |
| gamma-methacryloxypropytrimethoxysilane | 20 | | 40 | | 20 |

TABLE 1   (continued)

| | Example | Comparison Examples | | | |
|---|---|---|---|---|---|
| | 1 | 1 | 2 | 3 | 4 |
| vinyltriacetoxysilane | 20 | | | 40 | 20 |
| polyethylene-laminated paper | + | x | + | + | + |
| OPP film | + | x | x | x | x |
| PET film | + | x | x | x | x |
| Al vapor-deposited CPP film | + | x | x | x | x |
| release resistance (g/5 cm) | 20 | 19 | 22 | 25 | 22 |
| residual adhesion ratio (%) | 98 | 97 | 91 | 92 | 86 |

adhesion:
+ excellent (no delamination)
x poor (delamination occurred)

From the foregoing examples, it will be apparent to one skilled in the art that the exact formulation of the claimed invention (Example 1) is essential to achieve the solution to the problem proposed herein. If the components (E), (D), and (C) of this invention are omitted collectively (Comparison Example 1), or individually (Comparison Examples 2 - 4) respectively, a satisfactory result cannot be achieved.

**Claims**

1.   Organopolysiloxane composition for the formation of cured release films that comprises

(A) 100 weight parts of an organopolysiloxane that has a viscosity at 25°C of at least 40 centipoise (mPa.s) and contains on average at least 2 alkenyl groups in each molecule,

(B) 0.5 to 20 weight parts of an organohydrogenpolysiloxane that has a viscosity at 25°C of 1 to 1,000 centipoise (mPa.s) and contains on average at least 3 silicon-bonded hydrogen atoms in each molecule,

(C) 0.5 to 20 weight parts of an organoaluminum compound,

(D) 1 to 40 weight parts of an organofunctional alkoxysilane seleted from (i) methacryloxy-containing alkoxysilanes and (ii) acryloxy-containing alkoxysilanes,

(E) 1 to 40 weight parts of an alkenyl-containing organoacyloxysilane, other than component (D), and

(F) a catalytic quantity of a platinum group metal catalyst.

**Patentansprüche**

1.   Organopolysiloxanzusammensetzung für die Bildung von gehärteten Trennfilmen, welche enthält:

(A) 100 Gewichtsteile eines Organopolysiloxans, das eine Viskosität bei 25°C von wenigstens 40 Centipoise (mPa·s) aufweist und im Mittel wenigstens 2 Alkenylgruppen in jedem Molekül enthält,

(B) 0,5 bis 20 Gewichtsteile eines Organohydrogenpolysiloxans, das eine Viskosität bei 25°C von 1 bis 1.000 Centipoise (mPa·s) aufweist und im Mittel wenigstens 3 an Silicium gebundene Wasserstoffatome in jedem Molekül enthält,

(C) 0,5 bis 20 Gewichtsteile einer Organoaluminiumverbindung,

(D) 1 bis 40 Gewichtsteile eines organofunktionellen Alkoxysilans, ausgewählt aus (i) methacryloxyhaltigen Alkoxysilanen und (ii) acryloxyhaltigen Alkoxysilanen,

(E) 1 bis 40 Gewichtsteile eines alkenylhaltigen Organoacyloxysilans, das sich von Komponente (D) unterscheidet, und

(F) eine katalytische Menge eines Metallkatalysators aus der Platingruppe.

**Revendications**

1. Composition d'organopolysiloxanes pour la formation de films durcis favorisant le détachement, qui comprend

(A) 100 parties en poids d'un organopolysiloxane qui a une viscosité d'au moins 40 mPa.s à 25°C et qui contient en moyenne au moins 2 groupes alcényles dans chaque molécule,
(B) 0,5 à 20 parties en poids d'un organohydrogénopolysiloxane qui a une viscosité de 1 à 1 000 mPa.s à 25°C et qui contient en moyenne au moins 3 atomes d'hydrogène liés au silicium dans chaque molécule,
(C) 0,5 à 20 parties en poids d'un composé organique de l'aluminium,
(D) 1 à 40 parties en poids d'un alcoxysilane organofonctionnel choisi parmi (i) les alcoxysilanes contenant un groupe méthacryloxy et (ii) les alcoxysilanes contenant un groupe acryloxy,
(E) 1 à 40 parties en poids d'un organoacyloxysilane contenant un groupe alcényle, autre que le constituant (D), et
(F) une quantité catalytique d'un catalyseur à métal du groupe du platine.